# EUROPÄISCHE PATENTSCHRIFT

(11) **EP 3 625 880 B1**
(45) Veröffentlichungstag und Bekanntmachung des Hinweises auf die Patenterteilung: **11.10.2023**
(21) Anmeldenummer: 18727201.8
(22) Anmeldetag: 16.05.2018
(51) Int. Cl.: H02K 7/116

(54) **GETRIEBEMOTOREINHEIT**
TRANSMISSION MOTOR UNIT
ENSEMBLE DE TRANSMISSION ET DE MOTEUR

(30) Priorität: 06.07.2017 DE 102017211540
(43) Veröffentlichungstag der Anmeldung: 25.03.2020
(73) Patentinhaber: Siemens Aktiengesellschaft, 80333 München (DE)
(72) Erfinder: BACHMAIER, Georg, 80469 München (DE); CYRIACKS, Marco, 81669 München (DE); VITTORIAS, Iason, 80538 München (DE); ZÖLS, Wolfgang, 81249 München-Lochhausen (DE)
(74) Vertreter: Siemens Patent Attorneys
(86) Internationale Anmeldenummer: PCT/EP2018/062679
(87) Internationale Veröffentlichungsnummer: WO 2019/007581

(56) Entgegenhaltungen:
- DE-T5-112014 001 512
- US-A- 4 577 127
- US-A1- 2001 052 735
- US-A1- 2001 052 735
- US-A1- 2012 313 461
- US-A1- 2012 313 461

## Beschreibung

### 1. Technisches Gebiet

Die vorliegende Erfindung betrifft eine Getriebemotoreinheit. Die Erfindung ist insbesondere in den Bereichen der Antriebstechnik und Robotik sowie in deren Anwendungsbereichen angesiedelt.

### 2. Stand der Technik

Aus dem Stand der Technik sind bereits elektromagnetische Antriebe bekannt. Die elektromagnetischen Antriebe werden auch als Elektromotoren bezeichnet. Sie haben üblicherweise eine hohe Drehgeschwindigkeit mit mehreren tausend Umdrehungen pro Minute, jedoch häufig ein zu geringes Drehmoment. Folglich werden Getriebe verwendet, um das Drehmoment zu erhöhen.

Getriebe werden auch als Umformelemente bezeichnet, welche unterschiedliche Bewegungsgrößen ändern können. Sie übertragen und wandeln beispielsweise die Bewegungsgrößen Drehmomente, Drehrichtungen und Drehzahlen. Beispielsweise sind Harmonic Drive Getriebe bekannt, welche zur Gruppe der Wellgetriebe gehören. Der elliptische Wellengenerator ("Wave Generator") als angetriebenes Teil verformt über das Kugellager den Flexspline, der sich in den gegenüberliegenden Bereichen der großen Ellipsenachse mit dem innenverzahnten Circular Spline im Eingriff befindet. Mit Drehen des Wellengenerators verlagert sich die große Ellipsenachse und damit der Zahneingriffsbereich. Da der Flexspline weniger Zähne als der Circular Spline besitzt, vollzieht sich während einer halben Umdrehung des Wellengenerators eine Relativbewegung zwischen Flexspline und Circular Spline um einen Zahn und während einer ganzen Umdrehung um zwei Zähne. Bei fixiertem Circular Spline dreht sich der Flexspline als Abtriebselement entgegengesetzt zum Antrieb.

Aus der US 2012/313461 A1 ist eine elektromechanische Vorrichtung mit einer Welle, einem Rotor und einem Stator bekannt.

Aus der US 2001/052735 A1 ist ein elektrischer Aktor bekannt, welcher ein stationäres und ein rotierbares Gehäuse, sowie einen elektrischen Motor aufweist.

Nachteilig an der Verwendung eines Getriebes oder die Kombination aus einem Motor und einem entsprechenden Getriebe ist jedoch der erforderliche erhöhte Bauraum. Mit anderen Worten, sind die Getriebe aufgrund des Bauraums oder des Platzbedarfs für bestimmte Anwendungen ungeeignet bis unbrauchbar.

Die vorliegende Erfindung stellt sich daher die objektive technische Aufgabe eine Getriebemotoreinheit bereitzustellen, welche platzsparend und kompakt ausgebildet ist sowie das integrierte Getriebe weiterhin eine effiziente Übersetzung ermöglicht.

### 3. Zusammenfassung der Erfindung

Die oben genannte Aufgabe wird erfindungsgemäß durch eine Getriebemotoreinheit nach Anspruch 1 gelöst. Dementsprechend ist die erfindungsgemäße Getriebemotoreinheit auf eine Anordnung oder Kombination aus einem Motor und einem Getriebe gerichtet.

Das Getriebe ist ein Wellgetriebe und weist drei unterschiedliche Elemente auf, einen Flexspline, einen Circular Spline und einen Wellengenerator.

Der Flexspline kann sich üblicherweise verformen, beispielsweise mittels eines Wälzlagers. Dabei muss die Verformung des Flexspline über eine längere Lebensdauer sichergestellt werden sowie eine zu große Winkelverformung verhindert werden. Hierzu ist eine hinreichende axiale Baulänge des Flexspline erforderlich. Folglich wird durch die Baulänge viel Platz oder Bauraum benötigt. Der Bauraum bleibt jedoch im Stand der Technik ungenutzt.

Ferner können die Elemente des Motors und des Getriebes im Rahmen des Anspruchs 1 auf unterschiedliche Weise angeordnet, miteinander kombiniert und verbunden werden. Dementsprechend sind der Stator und der Rotor des Motors jeweils mit einem Element des Getriebes verbunden. Der Rotor kann oberhalb oder unterhalb des Stators etc. angeordnet werden. Gleiches gilt für die Elemente des Getriebes. Auch die Bauform oder Ausgestaltung der Elemente kann im Rahmen des Anspruchs 1 beliebig ausgebildet werden.

In diesem üblicherweise ungenutzten oder freien Bauraum des Getriebes wird der Motor integriert. Dadurch ist die Getriebemotoreinheit im Gegensatz zum Stand der Technik sehr kompakt und platzsparend. Folglich ist die Getriebemotoreinheit auch für jegliche Anwendungen einsetzbar.

Erfindungsgemäß ist der Motor in das Getriebe integriert. Dementsprechend ist die Getriebemotoreinheit kompakt und platzsparend.

In einer nicht erfindungsgemäßen Variante kann der Rotor mit dem dritten Element, der Stator mit dem ersten Element des Getriebes und das erste Element des Getriebes mit der mechanischen Masse verbunden sein.

In einer nicht erfindungsgemäßen Variante kann der Stator über ein Statorgehäuse mit dem ersten Element des Getriebes verbunden sein.

Dementsprechend ist der Rotor in einer nicht erfindungsgemäßen Variante beispielsweise mit dem Wellengenerator verbunden und der Stator mit dem Flexspline. In der nicht erfindungsgemäßen Variante ist der Flexspline weiterhin mit der mechanischen Masse verbunden.

In einer weiteren Ausgestaltung ist der Rotor über ein Rotorgehäuse mit dem ersten Element des Getriebes verbunden.

Erfindungsgemäß ist der Stator mit dem Wellengenerator verbunden und der Rotor mit dem Flexspline. Der Wellengenerator ist weiterhin mit der mechanischen Masse verbunden. Die Verbindung kann über ein Gehäuse oder sonstiges Element erfolgen.

In einer weiteren Ausgestaltung ist die Getriebemotoreinheit oder mindestens ein Element der Getriebemotoreinheit in einem Gehäuse angeordnet. Dementsprechend ist die Getriebemotoreinheit mindestens teilweise von einem Gehäuse umgeben. Dadurch wird die Kompaktheit erhöht.

In einer weiteren Ausgestaltung weist das Statorgehäuse ein Material auf, welches temperaturleitfähig ist. Dementsprechend wird ein Material verwendet, welches eine gute Temperaturleitfähigkeit gewährleistet, wie zum Beispiel Aluminium. Dadurch kann die Abwärme des Antriebs aus der Motorgetriebeeinheit vorteilhafterweise einfach und effizient abgeführt werden ohne weitere Komponenten zu benötigen trotz Kapselung. In einer weiteren Ausgestaltung weist mindestens ein Element der Getriebemotoreinheit mindestens ein Loch zum Durchführen mindestens eines Kabels auf. Dementsprechend wird in eine oder mehrere Elemente der Getriebemotoreinheit ein Loch oder eine Bohrung eingefügt. Dadurch können vorteilhafterweise Kabel durchgeführt oder verlegt werden, welche beispielsweise für die Motoransteuerung benötigt werden. Alternativ oder zusätzlich können auch Schrauben oder andere Elemente zum Verschrauben der Elemente verwendet werden.

In einer weiteren Ausgestaltung weist die Getriebemotoreinheit weiterhin ein elliptisches Wälzlager zum Verformen des ersten Elements des Getriebes auf.

In einer weiteren Ausgestaltung weisen Flexspline und Circular Spline des Wellgetriebes jeweils eine Verzahnung zum Herstellen eines gemeinsamen Formschlusses auf.

Dementsprechend ist das Getriebe als Wellgetriebe ausgebildet und kann weitere entsprechende Elemente aufweisen, wie Wälzlager und Verzahnungen des Flexspline und des Circular Spline. Dadurch ist die Getriebemotoreinheit vorteilhafterweise beliebig kombinierbar und für eine Vielzahl von Anwendungen flexibel einsetzbar.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
Fig. 1 zeigt eine Detailansicht einer nicht erfindungsgemäßen Getriebemotoreinheit.
Fig. 2 zeigt eine Detailansicht einer Getriebemotoreinheit nach einer Ausführungsform der Erfindung.
Fig. 3 zeigt eine Detailansicht einer weiteren nicht erfindungsgemäßen Getriebemotoreinheit.

### 5. Beschreibung der bevorzugten Ausführungsformen

Im Folgenden werden bevorzugte Ausführungsformen der vorliegenden Erfindung in Bezug auf die Figuren beschrieben.

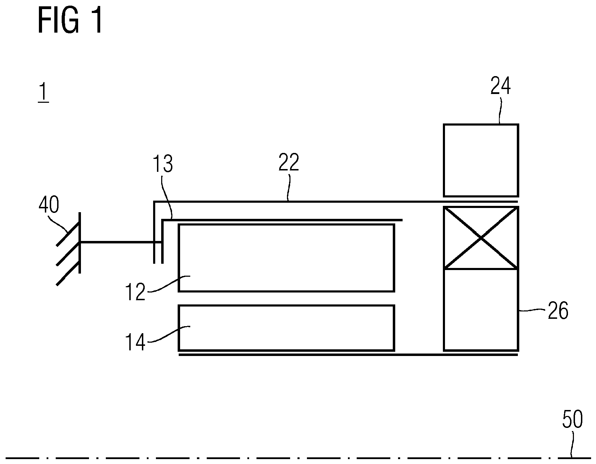

Figur 1 zeigt eine nicht erfindungsgemäße Variante einer Getriebemotoreinheit 1, welche um eine Mittelwelle 50 gelagert ist. Die Getriebemotoreinheit 1 weist zwei Komponenten oder Anordnungen 12, 14, 22, 24, 26 auf, nämlich einen Motor 12, 14 und ein Getriebe 22, 24, 26. Der Motor 12, 14 besteht gemäß Figur 1 aus einem Stator 12 und einem Rotor 14. Ferner handelt es sich bei dem Getriebe 22, 24 um ein Wellgetriebe, welches die üblichen Bestandteile eines Flexspline 22, eines Circular Spline 24 und eines Wellengenerators ("Wave Generator") 26 aufweist.

Der Rotor 14 ist gemäß Figur 1 mit dem Wellengenerator 26 verbunden. Der Stator 12 ist über ein Statorgehäuse 13 mit dem Flexspline 22 verbunden, welcher mit mechanischer Masse 40 verbunden ist. Folglich drehen sich der Rotor 14 und der Wellengenerator 26. Als Material für das Statorgehäuse 13 und/oder andere Elemente wird ein Werkstoff verwendet, welcher eine möglichst gute Temperaturleitfähigkeit hat. Die Temperaturleitfähigkeit ist erforderlich, um die Abwärme des Abriebs aus dem geschlossenen Raum der Getriebemotoreinheit 1 abführen zu können.

Ferner werden Löcher oder Bohrungen in dem Flexspline 22, dem Statorgehäuse 13 und/oder anderen Elementen verwendet. Die Löcher sind erforderlich, um Kabel aus dem geschlossenen Raum hinaus zu verlegen. Hierbei werden Schrauben weggelassen. Alternativ können jedoch auch Schrauben oder sonstige Elemente verwendet werden. Beispielsweise können Löcher im Flexspline zum Verschrauben oder für Kabel verwendet werden.

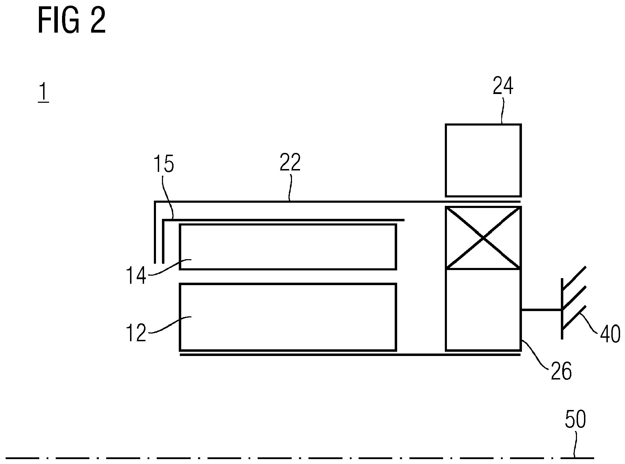

Figur 2 zeigt eine Getriebemotoreinheit 1 nach einer Ausführungsform der Erfindung. In Figur 2 ist der Stator 12 mit dem Rotor 14 ausgetauscht. Mit anderen Worten, ist der Rotor 14 oberhalb des Stators 12 angeordnet. Der Rotor 14 ist gemäß Figur 2 über ein Rotorgehäuse 15 mit dem Flexspline 22 verbunden. Der Stator 12 ist ohne Statorgehäuse 13 mit dem Wellengenerator 26 verbunden. In Figur 2 ist nicht der Flexspline 22, sondern der Wellengenerator 26 mit der mechanischen Masse 40 verbunden. Folglich drehen sich der Rotor 14 und der Flexspline 22. Die Übersetzungsverhältnisse sind gemäß Figuren 1 und 2 gleich, lediglich die Anordnungen der Elemente 12, 14 unterscheiden sich.

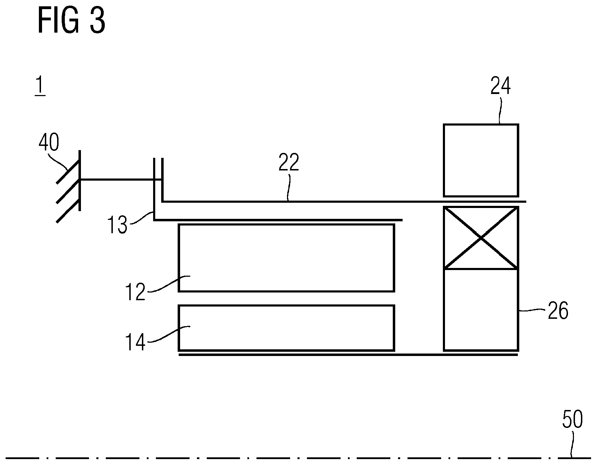

Der Flexspline 22 weist im Vergleich zu den Figuren 1 und 2 in Figur 3 (nicht erfindungsgemäße Variante) eine andere Bauform auf. Diese Bauform vereinfacht die Verlegung der Kabel und nutzt alle Verschraubungsbohrungen des Flexspline 22. Dadurch können vorteilhafterweise Festigkeitseinbußen bei der Befestigung verhindert werden. Dies kann beim Übertragen des maximalen Drehmoments von Bedeutung sein. Die Anordnungen oder Bauformen der Elemente 12, 14, 22, 24, 26, 30, 40 kann beliebig an die Anwendungen des Anwenders angepasst werden. Ferner kann die Getriebemotoreinheit 1 oder Elemente der Getriebemotoreinheit als geschlossener Raum in einem Gehäuse 16 integriert werden.

## Patentansprüche

1. Getriebemotoreinheit (1), aufweisend
a. einen Motor (12, 14) mit einem Stator (12) und einem Rotor (14),
b. ein Wellgetriebe (22, 24, 26) mit einem Flexspline (22), einem Circular Spline (24) und einem Wellengenerator (26), wobei
c. ein Element des Motors (12, 14) mit dem Wellengenerator (26), das andere Element des Motors (12, 14) mit dem Flexspline (22) des Wellgetriebes (22, 24, 26) verbunden ist, und
d. ein Element des Wellgetriebes (22, 24, 26) mit mechanischer Masse (40) verbunden ist,
wobei der Motor (12, 14) in das Wellgetriebe (22, 24, 26) integriert ist,
**gekennzeichnet dadurch, dass**
der Stator (12) mit dem Wellengenerator (26), der Rotor (14) mit dem Flexspline (22) des Wellgetriebes (22, 24, 26) und der Wellengenerator (26) des Wellgetriebes (22, 24, 26) mit der mechanischen Masse (40) verbunden sind.

2. Getriebemotoreinheit (1) nach Anspruch 1, wobei der Rotor (14) über ein Rotorgehäuse (15) mit dem Flexspline (22) des Wellgetriebes (22, 24, 26) verbunden ist.

3. Getriebemotoreinheit (1) nach einem der vorhergehenden Ansprüche, wobei die Getriebemotoreinheit (1) oder mindestens ein Element der Getriebemotoreinheit (1) in einem Gehäuse angeordnet ist.

4. Getriebemotoreinheit (1) nach einem der vorhergehenden Ansprüche, wobei das Statorgehäuse (13) ein Material aufweist, welches temperaturleitfähig ist.

5. Getriebemotoreinheit (1) nach einem der vorhergehenden Ansprüche, wobei mindestens ein Element der Getriebemotoreinheit (12, 14, 22, 24, 26) mindestens ein Loch zum Durchführen mindestens eines Kabels aufweist.

6. Getriebemotoreinheit (1) nach einem der vorhergehenden Ansprüche, weiterhin aufweisend ein elliptisches Wälzlager zum Verformen des Flexsplines (22) des Wellgetriebes (22, 24, 26).

7. Getriebemotoreinheit (1) nach einem der vorhergehenden Ansprüche, wobei das Flexspline (22) und das Circular Spline (24) des Wellgetriebes (22, 24, 26) jeweils eine Verzahnung zum Herstellen eines gemeinsamen Formschlusses aufweisen.

## Claims

1. Geared motor unit (1), having:
a. a motor (12, (14) having a stator (12) and a rotor (14),
b. a wave gearbox (22, 24, 26) having a flex spline (22), a circular spline (24), and a wave generator (26), wherein
c. an element of the motor (12, 14) is connected to the wave generator (26), and the other element of the motor (12, 14) is connected to the flex spline (22) of the wave gearbox (22, 24, 26), and
d. an element of the wave gearbox (22, 24, 26) is connected to a mechanical mass (40),
wherein the motor (12, 14) is integrated in the wave gearbox (22, 24, 26),
**characterized in that**
the stator (12) is connected to the wave generator (26), the rotor (14) is connected to the flex spline (22) of the wave gearbox (22, 24, 26), and the wave generator (26) of the wave gearbox (22, 24, 26) is connected to the mechanical mass (40).

2. Geared motor unit (1) according to Claim 1, wherein the rotor (14) by way of a rotor housing (15) is connected to the flex spline (22) of the wave gearbox (22, 24, 26).

3. Geared motor unit (1) according to one of the preceding claims, wherein the geared motor unit (1), or at least one element of the geared motor unit (1), is disposed in a housing.

4. Geared motor unit (1) according to one of the preceding claims, wherein the stator housing (13) comprises a material which is thermally conductive.

5. Geared motor unit (1) according to one of the preceding claims, wherein at least one element of the geared motor unit (12, 14, 22, 24, 26) has at least one hole for routing at least one cable.

6. Geared motor unit (1) according to one of the preceding claims, furthermore having an elliptic roller bearing for deforming the flex spline (22) of the wave gearbox (22, 24, 26) .

7. Geared motor unit (1) according to one of the preceding claims, wherein the flex spline (22) and the circular spline (24) of the wave gearbox (22, 24, 26) have in each case one toothing for establishing a common form-fit.

## Revendications

1. Ensemble (1) de transmission et de moteur, comportant
a. un moteur (12, 14) ayant un stator (12) et un rotor (14),
b. une transmission (22, 24, 26) ondulatoire ayant une flexspline (22), une circular spline (24) et un générateur (24) d'ondes, dans lequel
c. un élément du moteur (14) est relié au générateur (26) d'ondes, l'autre élément du moteur (12, 14) est relié à la flexspline (22) de la transmission (22, 24) ondulatoire, et
d. un élément de la transmission (22, 24, 26) ondulatoire est relié à une masse (40) mécanique,
dans lequel le moteur (12, 14) est intégré dans la transmission (22, 24, 26) ondulatoire, **caractérisé en ce que**
le stator (12) est relié au générateur (26) d'ondes, le rotor (14) est relié à la flexspline de la transmission (22, 24, 26) ondulatoire et le générateur (26) d'ondes de la transmission (22, 24, 26) ondulatoire est relié à la masse (40) mécanique.

2. Ensemble (1) de transmission et de moteur suivant la revendication 1, dans lequel le rotor (14) est relié à la flexspline (22) de la transmission (22, 24, 26) ondulatoire par une enveloppe (15) du rotor.

3. Ensemble (1) de transmission et de moteur suivant l'une des revendications précédentes, dans lequel l'ensemble (1) de transmission et de moteur ou au moins un élément de l'ensemble (1) de transmission et de moteur est disposé dans une enveloppe.

4. Ensemble (1) de transmission et de moteur suivant l'une des revendications précédentes, dans lequel l'enveloppe (13) du stator a un matériau qui est apte à diffuser la température.

5. Ensemble (1) de transmission et de moteur suivant l'une des revendications précédentes, dans lequel au moins un élément de l'ensemble (12, 14, 22, 24, 26) de transmission et de moteur a au moins un trou de passage d'au moins un câble.

6. Ensemble (1) de transmission et de moteur suivant l'une des revendications précédentes, comportant en outre un palier à roulement elliptique pour la déformation de la flexspline (22) de la transmission (22, 24, 26) ondulatoire.

7. Ensemble (1) de transmission et de moteur suivant l'une des revendications précédentes, dans lequel la flexspline (22) et la circular spline (24) de la transmission (22, 24, 26) ondulatoire ont respectivement une denture de production d'une complémentarité de forme commune.
